# EUROPEAN PATENT SPECIFICATION

(11) **EP 2 051 953 B1**
(45) Date of publication and mention of the grant of the patent: **28.04.2010**
(21) Application number: 07769076.6
(22) Date of filing: 25.07.2007
(51) Int. Cl.: C05C 1/00, C05C 3/00, C05D 5/00, C05D 9/00

(54) **GRANULATED FERTILIZER CONTAINING WATER SOLUBLE FORMS OF NITROGEN, MAGNESIUM AND SULPHUR, AND METHOD OF ITS PREPARATION**
DÜNGERGRANULAT, DAS WASSERLÖSLICHE FORMEN VON STICKSTOFF, MAGNESIUM UND SCHWEFEL ENTHÄLT, SOWIE VERFAHREN ZU SEINER HERSTELLUNG
ENGRAIS GRANULAIRE CONTENANT DES FORMES D'AZOTE, DE MAGNÉSIUM ET DE SOUFRE SOLUBLES DANS L'EAU, ET SON PROCÉDÉ DE FABRICATION

(30) Priority: 26.07.2006 SK 1062006
(43) Date of publication of application: 29.04.2009
(73) Proprietor: Duslo, A.S., 927 03 Sala (SK)
(72) Inventor: LENCSES, Ladislav, 951 32 Horna Kralova (SK); KRALIK, Milan, 841 05 Bratislava (SK); LEHOCKY, Peter, 949 01 Nitra (SK); STEFANCOVA, Radka, 966 15 Banska Bela (SK); KERDO, Pavol, 925 22 Velke Ulany (SK); FERENCI, Michal, 951 07 Maly Cetin (SK); POLAK, Anton, 925 63 Dolna Streda (SK)
(74) Representative: Bachrata, Magdaléna
(86) International application number: PCT/SK2007/050017
(87) International publication number: WO 2008/013510

(56) References cited:
- DE-A1- 3 320 181
- DE-B- 1 010 078
- DE-B- 1 018 886
- DE-C- 566 659
- HOFFMANN J, MILEWSKA A, KRAWCZYK B,: "Use of ammonium sulfate for preparation of ammoshenite by dolomite decomposition by sulfuric acid" CHEMICAL ABSTRACTS + INDEXES, AMERICAN CHEMICAL SOCIETY. COLUMBUS, US, vol. 113, no. 21, 19 November 1990 (1990-11-19), XP000183337 ISSN: 0009-2258

## Description

### Technical Field

The invention concerns granulated three-component fertilizer containing water soluble forms of nitrogen, magnesium and sulphur (NMgS hereinafter), as well as a method of its preparation. The fertilizer is suitable to be used in agriculture for fertilizing agricultural crops.

### Background Art

Magnesium belongs to oligobiogenic elements inevitable for life. Its deficiency causes lowered formation of chlorophyll. Content of magnesium in soil is generally relatively high, but only a small fraction of it is available to plants. Magnesium most often occurs in the form of carbonates and sulphates. Magnesium carbonate is nearly water insoluble, and it is acceptable for plants only in acidic soils. Sulphates are easily soluble in water and their acceptance by plants is independent of the soil pH. In neutral and alkaline soils, magnesium acceptance from sulphates is more effective than from carbonates.

Large amount of granulated industrial fertilizers contains magnesium mostly in the form of ground dolomite or magnesite, thus only in the carbonate form. In the water soluble sulphate form, the fertilizers are prepared mostly from kieserite.

Recently, the problem of preparation of the NMgS fertilizer is described most closely in the patent DE 3320181 A, dealing with a nitrogen-magnesium fertilizer, consisting of MgSO₄ and (NH₄)₂SO₄, of which binary salt is formed. The process of the fertilizer preparation is characterized by that (NH₄)₂SO₄ and MgSO₄, built into kieserite, with water or aqueous solution or with melt of (NH₄)₂SO₄ and urea are mixed into the form of a slurry. The slurry is left to react at least for 15 minutes, more preferably 30 to 60 minutes, at a temperature of 60 °C to 160 °C. When preparing the fertilizer, the raw materials (NH₄)₂SO₄ and kieserite (MgSO₄H₂O) must be mixed with water and a suspension must be formed, containing water in such amount that the mixture contains from 5 to 20 % by weight of water, wherein kieserite forms with (NH₄)₂SO₄ a binary salt MgSO₄.(NH₄)₂SO₄. x H₂O. A disadvantage of the process, guided in such manner, is the fact that no binary salt MgSO₄.(NH₄)₂SO₄. x H₂O having the number (x) of moles of water higher than 6, i. e. hydrated boussingaultite, can arise. A binary salt having the number (x) of moles of water less than 6, becomes wet under ordinary conditions. A further disadvantage consists in that for the production of such fertilizer, kieserite is used as magnesium source, which is more expensive than magnesite and, moreover, it reacts with ammonium sulphate more slowly than magnesium nitrate.

The temperature from 80 to 160 °C appears to be necessary for the formation of a binary salt of magnesium and ammonium sulphates within 60 minutes. An advantage is that less water evaporates. In this way can, for example, (NH₄)₂SO₄ and kieserite, when melted with the raw material ammonium nitrate, which contains 97 % NH₄NO₃ and 3 % of water, at a temperature of 140 °C form the binary salt within approximately 45 minutes. The mole ratio of ammonium sulphate to kieserite is 1:1, but excess of (NH₄)₂SO₄ may also be used. To prepare an N-Mg fertilizer with higher content of nitrogen, further raw material, like urea or NH₄NO₃, must be entered in such amount, which ensures the required amount of nitrogen. The authors of the patent state that conversion of kieserite and (NH₄)₂SO₄ takes place under specified conditions practically completely, and the fertilizer contains no kieserite. Kieserite remains only in the by-product. Under the influence of fluctuating air temperature, hardness of the granules of the kieserite fertilizer decreases and they loose strength within relatively short time period. Grains and granules start to disintegrate and dust is formed.

DE 10 18886 also discloses fertilizers comprising boussingaultite, namely (NH ₄)₂SO₄.MgSO₄.6H₂O and (NH₄)₂SO₄, but no binary salt comprising NH ₄NO₃ and (NH₄)₂SO₄ is present in the composition.

In the patent EP 00922685 A1, preparation of a mineral fertilizer in granulated form, based on NMgSO₄, is described. The fertilizer contains 16 to 30 % of the total MgO, 12 to 30 % of water soluble MgO and 30 to 50 % of sulphur (considered as SO₃). The fertilizer is obtained by dissolving materials containing magnesium, for example from the magnesite production, in sulphuric acid and mixing with other magnesium raw materials. The raw materials may be also Mg(OH)₂ and MgCa(CO₃)₂.

Further document WO 01/38258 A1 describes the process of preparation of a chemical compound used as an additive to fertilizers, containing 35 to 60 % by weight of MgSO₄, 5 to 35 % by weight of CaSO₄, 10 to 35 % by weight of a mixture of MgCO₃ with CaCO₃, water to 5 % by weight (free or bound in crystals), and the rest is MgO.

Preparation by the wet process is based on the reaction of magnesite (MgCO₃) suspension with sulphuric acid (H₂SO₄). A solution of MgSO₄ had been obtained, which was further dried by spraying into a fluid layer. However, the process has not been very practical because of corrosion during MgSO₄ formation at a given temperature, which has been caused by the mixture of sulphuric acid with water. Moreover, the obtained MgSO₄.7H₂O is not suitable for further application, especially for slurry granulation. The main reaction takes place between MgO and H₂SO₄ under formation of MgSO₄ and water, and it is exothermic. The generated heat is not sufficient for full completion of the reaction; therefore air heated to a temperature in the range of 110 to 200 °C, more often 120 to 180 °C and most often below 150 °C is used in the reactor. The reaction requires specific size of MgO or MgCO₃ particles, which is defined as 90 % of particles smaller than 100 µm and 40 % smaller than 30 µm. The time of the reaction between MgO and H₂SO₄ is longer than 8 minutes, preferably longer than 10 minutes.

In the patent BE 610 993, there is described a method of production of granulated fertilizers N-K and N-Mg in such way that the salts potassium or magnesium sulphate with ammonium sulphate are added to a solution of ammonium nitrate having the temperature of 120 °C and concentration of 80 to 88 %, and the mixture is granulated. The N-Mg fertilizer is prepared by addition of (NH₄)₂SO₄ or ammonia, H₂SO₄, MgSO₄ (kieserite) to HNO₃ with ammonia or to a solution of NH₄NO₃ at the temperature of 160 °C and the mixture is thickened to water content of 4 %. If kieserite containing 26.8 % of MgO is used, binary salt of ammonium-magnesium sulphate is formed and also Mg(NO₃)₂, which is hygroscopic. Therefore, (NH₄)₂SO₄ is added to react with Mg(NO₃)₂ to sulphate and, simultaneously, binary salts 2NH₄NO₃.(NH₄)₂SO₄ and 3NH₄NO₃.(NH₄)₂SO₄ are formed with NH₄NO₃. The product contains 62 % of (NH₄)₂SO₄ and 38 % of NH₄NO₃ or 29 % of (NH₄)₂SO₄ and 71 % of NH₄NO₃. The resulting fertilizer has a composition of 20 % of N, 6.5 (max. 9) % of MgO. Sulphur content is not stated in the patent description.

New product - Hydro Optimag^{PLUS} - has been specifically developed for places with low content of magnesium. Magnesium occurs there in 100% water soluble form. Water soluble particles of sulphur complement the product. Specification of the product is as follows:
Nitrogen, magnesium and sulphur 24 + 8 (+ 6)
24 % total nitrogen (12 % nitrate nitrogen, 12 % ammonia nitrogen)
8 % water soluble MgO
6 % water soluble S.

The aim of the present invention is to provide a stable NMgS fertilizer with water soluble components, including an economically interesting production method.

### Disclosure of invention

The subject-matter of the invention is the granulated fertilizer containing water soluble forms of nitrogen, magnesium and sulphur (NMgS fertilizer), as well as a method of its preparation.

The fertilizer, prepared according to the present invention, contains magnesium oxide (MgO) in the form of boussingaultite - (NH₄)₂SO₄.MgSO₄.6H₂O, which, contrary to efremovite - NH₄SO₄.2MgSO₄, is in the given fertilizer air moisture resistant up to 55 % of relative humidity (at a temperature of 30 °C). The fertilizer further contains binary salts of ammonium nitrate, namely 2NH₄NO₃.(NH₄)₂SO₄ and 3NH₄NO₃.(NH₄)₂SO₄, but without free or in only small amounts present (residual) ammonium sulphate, greater amount of which causes after some time in the presence of air moisture the reaction of ammonium nitrate with ammonium sulphate to 2NH₄NO₃.(NH₄)₂SO₄ and 3NH₄NO₃.(NH₄)₂SO₄, which in higher concentrations lead to instability of the fertilizer. The situation is similar with the presence of efremovite - NH₄SO₄.2MgSO₄, which takes moisture already under ordinary conditions and reacts to (NH₄)₂SO₄.MgSO₄.6H₂O and MgSO₄, whereby it changes its crystal structure, weakens the granules and increases dustiness of the fertilizer.

Preparation of the NMgS fertilizer:
Contrary to granulated Mg fertilizers known so far, the NMgS fertilizer is not produced from the more expensive kieserite, but from the substantially less expensive magnesite and nitric acid, of which magnesium nitrate is prepared, which reacts very quickly with ammonium sulphate to boussingaultite. Reaction of kieserite with ammonium sulphate is considerably slower and considerably greater amount of water and higher temperature than for the preparation from magnesium nitrate is necessary for it to react completely, and the excess water must then be removed.

Magnesite is decomposed in a stirred reactor by nitric acid having a concentration of 30 to 60 % by weight, preferably 60 % by weight, whereby reaction mixture of magnesium nitrate with small amount (0 to 15 %) of unreacted nitric acid is formed, which is neutralized by ammonia water or ammonia gas. The neutralized reaction mixture of magnesium nitrate is thickened so, that the water content decreases to 30 to 45 %. If concentrated nitric acid is used, it is not necessary to thicken the reaction mixture of magnesium nitrate.

The neutralized reaction mixture of magnesium nitrate having a temperature of 80 to 150 °C is mixed in the reactor with ammonium sulphate, whereby slurry results, the temperature of which is maintained at a value of 80 to 120 °C. The added ammonium sulphate reacts with magnesium nitrate to boussingaultite (NH₄)₂SO₄.MgSO₄.6H₂O. It is possible, either simultaneously or afterwards, to add the melt of magnesium nitrate to adjust nitrogen content in the fertilizer. The reaction time for reaction of the ammonium sulphate is 20 to 80 minutes, preferably 40 to 60 minutes. Water content in the slurry should be 10 to 30 %. The slurry is stirred in a blade granulator with dried recycle (12 % of water), whereby wet granulate containing 13 to 17 % of water is formed. The wet granulate is dried so, that only free water (not water of crystallization) is removed, i.e. the product contains approximately 12 % of water.

### Examples of invention embodiments

### Example 1

### A) Preparation of the neutralized reaction mixture by batch process

6 l of nitric acid having the concentration of 60 % by weight are charged into a 10 l reactor with anchor agitator and powder magnesite in the amount of 3.8 kg is added under stirring within 1 h at a temperature of 60 °C at the beginning and a temperature of 120 °C at the end. Subsequently, ammonia gas is added under stirring to the reaction mixture, until pH 4 is reached. In this way the melt of magnesium nitrate is prepared containing 49 % of Mg(NO₃)₂, 5.8 % of Ca(NO₃)₂, 2 % of NH₄NO₃, 38 % of water and the remainder is undecomposed magnesite and Fe(OH)₃.

### B) Preparation of granulated fertilizer by batch process

A sulfonation flask equipped with a stirrer is charged with 1650 g of the melt of magnesium nitrate of the composition given in A) and 1200 g of NH₄NO₃ (3 % of water), the charge is heated to 120 °C and 2270 g of (NH₄)₂SO₄ and 100 g of water are added under stirring. The resulting mixture is stirred at a temperature of 105 °C for 60 minutes. The slurry, prepared in this way, is mixed in a blade mixing screw with recycle from a previously prepared granulated fertilizer in the ratio of 1:2, whereby granulate is prepared, which is dried at a temperature of 60 °C and of which the production fraction is separated.

Point strength of the product is 123 N, dusting 0.06 %, abrasion 0.1 % and sintering capacity of the untreated product 34 N, critical relative humidity 57 %.

Product composition: 21.1 % of N, 4.9 % of MgO, 10.9 % of S, water content 12.5 %. According to X-ray analysis the product contains boussingaultite (NH₄)₂SO₄.MgSO₄.6H₂O, 2NH₄NO₃.(NH₄)₂SO₄ and 3NH₄NO₃.(NH₄)₂SO₄.

### Example 2

### A) Preparation of the neutralized reaction mixture by continuous process

0.7 kg/h of ground magnesite and approximately 2 kg/h of concentrated nitric acid are charged into the first reactor in a cascade of 4 reactors, each of 10 volume. Temperature in the reactors is regulated (from the first to the last reactor) to the values of 80, 90, 100 and 120 °C. After leaving the reactors, the reaction mixture proceeds through a settler, where the undecomposed magnesite is separated, which then returns into the first or possibly second of the preceding reactors. The content of free HNO₃ ranges from 0.1 to 25 %, most often from 0.1 to 15 %. Subsequently, in a further (fifth) reactor, the reaction mixture is neutralized with ammonia gas to the pH value of between 2 and 6, preferably between 2 and 4.

In this way, melt of magnesium nitrate is prepared, containing on average 40 % of Mg(NO₃)₂, 3 % of Ca(NO₃)₂, 12 % of NH₄NO₃, 39 % of water and as the remainder undecomposed magnesite and Fe(OH)₃.

### B) Preparation of granulated fertilizer by continuous process

A reactor equipped with a stirrer is charged with 5.8 kg/h of the melt of magnesium nitrate, prepared by the method according to A), 2.1 kg/h of NH₄NO₃ and 6.3 kg/h of (NH₄)₂SO₄. With the residence time of 40 minutes, slurry is prepared, which is mixed in a blade granulator with the recycle from the preceding similar experiment in the ratio of 1:4, resulting in granulate, from which the production fraction is separated. The product is dried in a drier at a temperature of 75 °C.

### Example 3

### Mass production of granulated fertilizer by continuous process

1.4 t/h of ground magnesite and approximately 4 t/h of concentrated nitric acid are charged into the first reactor in a cascade of 4 reactors, each of the approximate volume of 200 hl. Temperature in the reactors (from the first to the last reactor) is regulated to the values of 60, 90, 120 and 130 °C. After leaving the reactors, the reaction mixture proceeds through a settler, where the undecomposed magnesite is separated. This fraction returns into the first reactor. The resulting reaction mixture contains free HN0₃ with the concentration of 0.1 to 25 % by weight, on an average 12 %. The reaction mixture is neutralized with ammonia gas to the pH value of 4.

In this way, melt of magnesium nitrate is obtained, which contains 49 % of Mg(NO₃)₂, 5 % of Ca(NO₃)₂, 3 % of NH₄NO₃, 36 % of water and the remainder is undecomposed magnesite and Fe(OH)₃.

The reactor for slurry preparation equipped with a stirrer is charged with 11.7 t/h of the melt of magnesium nitrate, 4.3 t/h of NH₄NO₃ and 12.8 t/h of (NH₄)₂SO₄. With the holding time of 60 minutes, slurry is prepared, which is mixed in a blade granulator with the recycle in the ratio of 1:4. From the obtained granulate, the production fraction is separated, which is dried in a drier at a temperature of 75 °C.

### Example 4

13.2 g of zinc sulphate heptahydrate, 14.3 g of orthoboric acid, 0.46 g of ammonium molybdate tetrahydrate and 0.1 g of cupric sulphate pentahydrate are added to 1650 g of the slurry, prepared according to Example 1 B. After adding the recycle, the product is granulated, whereby a fertilizer is obtained, containing 21.05 % of N, 4.9 % of MgO, 10.89 % of S, 0.05 % of B, 0.005 % of Mo, 0.06 % of Zn and 0.005 % of Cu.

### Industrial applicability

Method according to the present invention may be applied for preparation of granulated three-component fertilizer containing water soluble nitrogen, magnesium and sulphur, suitable to be used in agriculture for fertilizing agricultural crops. The above fertilizer is especially suitable for plant breeding on soils with low content of water soluble magnesium or for fast-growing plants requiring fast delivery of nutrients, for example for the so called energetic plants.

## Claims

1. Granulated fertilizer, containing water soluble forms of nitrogen, magnesium and sulphur with ammonium and magnesium cations, sulphate and nitrate anions, **characterized in that**
it contains 15 to 30 % by weight of nitrogen, 1 to 18 % by weight of sulphur, 2 to 10 % by weight of magnesium (expressed as magnesium oxide MgO), in the form of boussingaultite - (NH₄)₂SO₄.MgSO₄.6H₂O and binary salts ammonium nitrate - 2NH₄NO₃.(NH₄)₂SO₄ and 3NH₄NO₃.(NH₄)₂SO₄, wherein the content of boussingaultite in the fertilizer is 40 to 45 % by weight.

2. Granulated fertilizer according to claim 1, **characterized in that** it contains 19 to 26 % by weight of nitrogen, 5 to 13 % by weight of sulphur and 3 to 8 % by weight of magnesium, expressed as magnesium oxide MgO.

3. Method of preparation of granulated fertilizer containing water soluble forms of nitrogen, magnesium and sulphur with ammonium and magnesium cations, sulphate and nitrate anions according to claim 1, **characterized in that** magnesite is treated with concentrated nitric acid containing 30 to 80 % of HNO₃ at a temperature from 60 °C to 130 °C, under formation of reaction mixture containing magnesium nitrate, calcium nitrate, or possibly, according to the content of metallic compounds in magnesite, nitrates of iron, manganese and further metallic elements, and the remainder of undecomposed magnesite, the reaction mixture is subsequently neutralized with an alkaline agent to pH of 3 to 7.5, the neutralized reaction mixture is subsequently left to react with ammonium sulphate at a temperature of 80 to 130 °C for 20 to 80 minutes under formation of a slurry of boussingaultite (NH₄)₂SO₄.MgSO₄.6H₂O, containing 10 to 30 % by weight of water, which slurry is mixed with dried recycle from the preceding production in the ratio of 1:2 to 1:10 and it is granulated under formation of wet granulate, from which, after removing free water, the final product is obtained.

4. Method according to claim 3, **characterized in that** magnesite is treated with nitric acid in one mechanically stirred reactor.

5. Method according to claim 3, **characterized in that** magnesite is treated with nitric acid with the content of 60 % by weight.

6. Method according to claim 3, **characterized in that** magnesite is treated with nitric acid continuously in a three- to ten-step cascade of reactors, wherein magnesite is charged into the first reactor and at least 1 % by weight of the used nitric acid is also charged into the first reactor, and the remainder of the nitric acid is charged into the second to the last reactor, the resulting suspension is let to settle down, and 10 to 90 % of the sediment returns to the first to last but one reactor.

7. Method according to claim 3, **characterized in that** the reaction mixture resulting from magnesite decomposition is neutralized by ammonia to pH of 5 to 6.5.

8. Method according to claim 3, **characterized in that** the neutralized reaction mixture is left to react with ammonium sulphate (NH₄)₂SO₄ for 40 to 60 minutes.

9. Method according to claim 3, **characterized in that** the neutralized reaction mixture is mixed at a temperature of 80 to 130 °C with crystalline ammonium sulphate.

10. Method according to claim 3, **characterized in that** the neutralized reaction mixture is mixed at a temperature of 80 to 130 °C with crystalline ammonium sulphate and with melt of ammonium nitrate.

11. Method according to claim 3, **characterized in that** the wet granulate contains 10 to 17 % by weight, preferably 12 to 15 % by weight of water.

12. Method according to claim 3, **characterized in that** before entering the granulator, water is added to the slurry until the content of 10 to 30 % by weight, preferably 12 to 18 % by weight, is reached.

13. Method according to claim 3, **characterized in that** granulation is performed at a temperature of 50 to 90 °C, preferably 55 to 70 °C.

14. Method according to claim 3, **characterized in that** the temperature of the final product at drying does not exceed 90 °C, preferably 75 °C.

15. Method according to claim 3, **characterized in that** water content in the final product, granulated fertilizer, is 8 to 12 % by weight, preferably 10 to 12 % by weight.

16. Method according to claim 3, **characterized in that** trace elements in the form of sulphates, nitrates, boric acid, phosphates and/or oxides of trace elements and/or their hydroxides are added to the reaction mixture after decomposition of magnesite.

17. Method according to claim 3, **characterized in that** trace elements in the form of sulphates, nitrates, boric acid, phosphates and/or oxides of trace elements and/or their hydroxides are added to the slurry before granulation.

## Patentansprüche

1. Granuliertes Düngemittel, enthaltend wasserlösliche Stickstoff-, Magnesium- und Schwefelformen mit Ammonium- und Magnesiumkationen, Sulfat- und Nitratanionen,
***dadurch gekennzeichnet, dass*** es 15 bis 30 Gew.-% Stickstoff, 1 bis 18 Gew.-% Schwefel, 2 bis 10 Gew.-% Magnesium (ausgedruckt als Magnesiumoxid MgO), in der Form vom Boussingaultit - (NH₄)₂SO₄.MgSO₄.6H₂O und Doppelsalzen vom Ammoniumnitrat - 2NH₄NO₃.(NH₄)₂SO₄ und 3NH₄NO₃.(NH₄)₂SO₄ enthält, wobei der Inhalt vom Boussingaultit im Düngemittel 40 bis 45 Gew.-% beträgt.

2. Granulierte Düngemittel nach Anspruch 1, ***dadurch gekennzeichnet, dass*** sie 19 bis 26 Gew.-% Stickstoff, 5 bis 13 Gew.-% Schwefel und 3 bis 8 Gew.-% Magnesium, ausgedruckt als Magnesiumoxid MgO, enthalten.

3. Verfahren zur Herstellung von granuliertem Düngemittel mit Gehalt von wasserlöslichen Stickstoff-, Magnesium- und Schwefelformen mit Ammonium- und Magnesiumkationen, Sulfat- und Nitratanionen nach Anspruch 1, ***dadurch gekennzeichnet, dass*** Magnesit mit konzentrierter Salpetersäure mit Gehalt von 30 bis 80 % HNO₃ bei einer Temperatur im Bereich von 60 °C bis 130 °C behandelt wird, wobei ein Reaktionsgemisch enthaltend Magnesiumnitrat, Calciumnitrat, bzw. in Abhängigkeit von Zusammensetzung des Magnesits Eisennitrat, Mangannitrat und Nitrate anderer Metalle und unzersetzten Rest vom Magnesit entsteht, anschließend das Reaktionsgemisch mit einem Alkalimittel zu einem pH-Wert von 3 bis 7,5 neutralisiert wird, daraufhin das Reaktionsgemisch mit Ammoniumsulfat bei einer Temperatur im Bereich von 80 bis 130 °C in 20 bis 80 Minuten umgesetzt wird, worauf eine Boussingaultit (NH₄)₂SO₄.MgSO₄.6H₂O enthaltende Brühe mit Wassergehalt von 10 bis 30 Gew.-% erhalten wird, die mit einem getrockneten Recyklat aus vorheriger Produktion im Verhältnis von 1 : 2 bis 1 : 10 gemischt und unter Bildung vom Nassgranulat granuliert wird, aus welchem das Endprodukt nach Freiwasserentfernung durch Trocknung erhalten wird.

4. Verfahren nach Anspruch 3, ***dadurch gekennzeichnet, dass*** Magnesit mit konzentrierter Salpetersäure in einem mechanisch gerührten Reaktor behandelt wird.

5. Verfahren nach Anspruch 3, ***dadurch gekennzeichnet, dass*** Magnesit mit konzentrierter Salpetersäure mit Gehalt von 60 Gew.-% behandelt wird.

6. Verfahren nach Anspruch 3, ***dadurch gekennzeichnet, dass*** der Magnesit mit konzentrierter Salpetersäure kontinuierlich in drei- bis zehnstufiger Reaktorkaskade behandelt wird, wobei Magnesit in den ersten Reaktor vorgelegt wird, und in den ersten Reaktor auch zumindest 1 Gew.-% der eingesetzten Salpetersäure dosiert wird, und der Rest von Salpetersäure in den zweiten bis letzten Reaktor dosiert wird, die gebildete Suspension lässt man sich absetzen, und 10 bis 90 % des Sediments in den ersten bis vorletzten Reaktor des Kaskade zurückgeführt wird.

7. Verfahren nach Anspruch 3, ***dadurch gekennzeichnet, dass*** das durch Zersetzung vom Magnesit gebildete Reaktionsgemisch mit Ammoniak zu einem pH-Wert von 5 bis 6,5 neutralisiert wird.

8. Verfahren nach Anspruch 3, ***dadurch gekennzeichnet, dass*** das neutralisierte Reaktionsgemisch mit Ammoniumsulfat (NH₄)₂SO₄ in 40 bis 60 Minuten umgesetzt wird.

9. Verfahren nach Anspruch 3, ***dadurch gekennzeichnet, dass*** das neutralisierte Reaktionsgemisch mit kristallinem Ammoniumsulfat bei Temperatur von 80 bis 130 °C gemischt wird.

10. Verfahren nach Anspruch 3, ***dadurch gekennzeichnet, dass*** das neutralisierte Reaktionsgemisch mit kristallinem Ammoniumsulfat und einer Ammoniumnitratschmelze bei Temperatur von 80 bis 130 °C gemischt wird.

11. Verfahren nach Anspruch 3, ***dadurch gekennzeichnet, dass*** das nasse Granulat 10 bis 17 Gew.-%, bevorzugt 12 bis 15 Gew.-% Wasser enthält.

12. Verfahren nach Anspruch 3, ***dadurch gekennzeichnet, dass*** zu der Brühe vor deren Einführung in Granulator Wasser bis zur Erreichung eines Wassergehalts von 10 bis 30 Gew.-%, bevorzugt 12 bis 18 Gew.-%, zugegeben wird.

13. Verfahren nach Anspruch 3, ***dadurch gekennzeichnet, dass*** das Granulieren bei einer Temperatur von 50 bis 90 °C, bevorzugt 55 bis 70 °C, stattfindet.

14. Verfahren nach Anspruch 3, ***dadurch gekennzeichnet, dass*** die Temperatur des Endprodukts bei der Trocknung nicht 90 °C, bevorzugt nicht 75 °C übersteigt.

15. Verfahren nach Anspruch 3, ***dadurch gekennzeichnet, dass*** der Wassergehalt im Endprodukt, dem granulierten Düngemittel, 8 bis 12 Gew.-%, bevorzugt 10 bis 12 Gew.-% beträgt.

16. Verfahren nach Anspruch 3, ***dadurch gekennzeichnet, dass*** zu dem Reaktionsgemisch nach Zersetzung von Magnesit Spurenelemente in der Form von Sulfaten, Nitraten, Borsäure, Phosphaten und/oder Oxiden und/oder Hydroxiden der Spurenelemente zugegeben werden.

17. Verfahren nach Anspruch 3, ***dadurch gekennzeichnet, dass*** zu der Brühe vor dem Granulieren Spurenelemente in der Form von Sulfaten, Nitraten, Borsäure, Phosphaten und/oder Oxiden und/oder Hydroxiden der Spurenelemente zugegeben werden.

## Revendications

1. L'engrais granulé qui contient des formes de nitrogène, magnésium et soufre solubles dans l'eau, avec des cations de l'ammonium et de magnésium, des anions de sulfate et de nitrate, **caractérisé en ce qu'**il contient de 15 à 30 % en poids de nitrogène, de 1 à 18 % en poids de soufre, de 2 à 10 % en poids de magnésium (exprimé comme oxyde de magnésium MgO), sous forme de boussingaultite - (NH4)2SO4.MgSO4.6H2O et sels binaires de nitrate d'ammonium - 2NH4NO3.(NH4)2SO4 et 3NH4NO3.(NH4)2SO4, où le volume de boussingaultite dans l'engrais est de 40 à 45 % en poids.

2. L'engrais granulé selon la revendication 1, **caractérisé en ce q u'**il contient de 19 à 26 % en poids de nitrogène, de 5 à 13 % en poids de soufre et de 3 à 8 % en poids de magnésium, exprimé comme oxyde de magnésium MgO.

3. Méthode de préparation de l'engrais granulé qui contient des formes de nitrogène, magnésium et soufre solubles dans l'eau, avec des cations de l'ammonium et de magnésium, des anions de sulfate et de nitrate selon la revendication 1, **caractérisée en ce que** le magnésium est traité avec de l'acide nitrique concentré contenant de 30 à 80 % de HN03 à une température de 60 °C à 130 °C, en formant un mélange réactionnel contenant du nitrate de magnésium, nitrate de calcium, ou éventuellement selon le volume des composés métalliques dans le magnésium, nitrate de fer, de manganèse et d'autres éléments métalliques, et le reste de la magnésite non décomposée, le mélange réactionnel est ensuite neutralisé avec un agent alcalin à pH 3 - 7,5, le mélange réactionnel neutralisé est ensuite mis à réagir avec du sulfate d'ammonium à une température de 80 à 100 °C pour une période de 20 à 80 minutes en formant une bouillie de boussingaultite (NH4)2SO4.MgSO4.6H2O contenant de 10 à 30 % en poids de l'eau, qui est melangée avec du recyclage seché de la production précédente dans le rapport de 1 :2 à 1:10 et il est granulé en formant un granulé humide, à partir duquel, après l'élimination de l'eau libre par séchage, le produit final est obtenu.

4. Méthode selon la revendication 3, **caractérisée en ce que** la magnésite est traitée avec de l'acide nitrique dans un réacteur agité mécaniquement.

5. Méthode selon la revendication 3, **caractérisée en ce que** la magnésite est traitée avec de l'acide nitrique contenant 60 % en poids.

6. Méthode selon la revendication 3, **caractérisée en ce que** la magnésite est traitée avec de l'acide nitrique de façon continue dans une cascade de trois-à-dix réacteurs, où la magnésite est dosée dans le premier réacteur et au moins 1 % en poids des acides nitriques utilisés est aussi versé dans le premier réacteur, et le reste de l'acide nitrique est dosé à partir du deuxième jusqu'au dernier réacteur, la suspension résultante est laissée se déposer et entre 10 et 90 % des sédiments retourne au premier jusqu'à l'avant-dernier réacteur de la cascade.

7. Méthode selon la revendication 3, **caractérisée en ce que** le mélange réactionnel résultant de la décomposition de la magnésite est neutralisée par l'ammoniac au pH de 5 à 6,5.

8. Méthode selon la revendication 3, **caractérisée en ce que** le mélange réactionnel neutralisé est laissé réagir avec du sulfate d'ammonium (NH4)2S04 pour une période de 40 à 60 minutes.

9. Méthode selon la revendication 3, **caractérisée en ce que** le mélange réactionnel neutralisé est agité à une température de 80 à 130 °C avec du sulfate d'ammonium cristallin.

10. Méthode selon la revendication 3, **caractérisée en ce que** le mélange réactionnel neutralisé est agité à une température de 80 à 130 °C avec du sulfate d'ammonium cristallin et avec la fonte de nitrate d'ammonium.

11. Méthode selon la revendication 3, **caractérisée en ce que** le granulé humide contient de 10 à 17 % en poids, de préférance de 12 à 15 % en poids d'eau.

12. Méthode selon la revendication 3, **caractérisée en ce que** avant d'entrer dans le granulateur, l'eau est ajoutée à la bouillie jusqu'à l'obtention d'un volume de 10 à 30 % en poids, de préférence entre 12 et 18 % en poids,

13. Méthode selon la revendication 3, **caractérisée en ce que** la granulation est réalisée à une température de 50 à 90 °C, de préférence entre 55 et 70 °C,

14. Méthode selon la revendication 3, **caractérisée en ce que** la température du produit final lors du séchage ne dépasse pas 90 °C, de préférence 75 °C,

15. Méthode selon la revendication 3, **caractérisée en ce que** le volume de l'eau dans le produit final, l'engrais granulé, est de 8 à 12 % en poids, de préférence de 10 à 12 % en poids.

16. Méthode selon la revendication 3, **caractérisée en ce que** les oligo-éléments en forme de sulfates, nitrates, acide borique, phosphates et/ou oxydes des éléments sont ajoutés au mélange réactionnel après la décomposition de la magnésite.

17. Méthode selon la revendication 3, **caractérisée en ce que** les oligo-éléments en forme de sulfates, nitrates, acide borique, phosphates et/ou oxydes des oligo-éléments et/ou leurs hydroxydes sont ajoutés à la bouillie avant la granulation.
